# EUROPEAN PATENT APPLICATION

(11) **EP 3 958 421 A1**
(43) Date of publication of application: **23.02.2022**
(21) Application number: 19924716.4
(22) Date of filing: 18.04.2019
(51) Int. Cl.: H02J 1/00, H02M 3/00

(54) **POWER CONVERSION CIRCUIT**

(71) Applicant: HITACHI INDUSTRIAL EQUIPMENT SYSTEMS CO., LTD., Tokyo 101-0022 (JP)
(72) Inventor: SATO, Fumihiro, Tokyo 101-0022 (JP); HIRAGA, Masahiro, Tokyo 101-0022 (JP); TANAKA, Makoto, Tokyo 101-0022 (JP); TANABE, Keisuke, Tokyo 101-0022 (JP)
(74) Representative: MERH-IP Matias Erny Reichl Hoffmann Patentanwälte PartG mbB
(86) International application number: PCT/JP2019/016577
(87) International publication number: WO 2020/213113

(57) **Abstract**

A power conversion circuit includes a power supply and a first load and a second load connected in parallel to the power supply. A first voltage and a second voltage are input to the first load and the second load, respectively. An output of the second load is input to the first load. A control unit that controls the first voltage and the second voltage based on a voltage at a connection point of the parallel connection is provided. The control unit controls the second voltage to be delayed from the first voltage when the power conversion circuit is activated.

## Description

### TECHNICAL FIELD

The present invention relates to a power conversion circuit for supplying power to a semiconductor integrated circuit.

### BACKGROUND ART

Various semiconductor integrated circuits, such as analog ICs including operational amplifiers or comparators or microcomputers, are mounted in an electronic device. These semiconductor integrated circuits need to be supplied with a power supply voltage suitable for the circuits. Therefore, the electronic device has a plurality of DC power supply lines corresponding to the respective circuits.

As a method for controlling the supply of power of a plurality of power supply circuits, Patent Document 1 is known. Fig. 1 in Patent Document 1 shows a circuit configuration in which a power supply control calculation circuit, a plurality of DC-DC converters, an LSI to which each output voltage of the plurality of DC-DC converters is applied, and an ON/OFF threshold value detection circuit for the plurality of DC-DC converters are connected to each other. In addition, Fig. 2 in Patent Document 1 shows an operation waveform exemplifying the result of controlling the power-on sequence by the power supply control calculation circuit in the configuration shown in Fig. 1. In the method of Patent Document 1, the power-on timing for the LSI or the rise time of each power supply voltage is stored in the power supply control calculation circuit in advance, and ON/OFF of the plurality of DC-DC converters is controlled from the result of comparison between the rising waveform of each power supply voltage and the power-on timing stored in advance, so that the power supply voltage is controlled to rise in a desired sequence.

### CITATION LIST

### PATENT DOCUMENT

Patent Document 1: JP 2015-141585 A

### SUMMARY OF THE INVENTION

### PROBLEMS TO BE SOLVED BY THE INVENTION

For semiconductor integrated circuits, the maximum and minimum voltage values (absolute maximum rated values) that can be applied to the terminals of each package are specified. If this absolute maximum rated value is exceeded, there is a possibility of lowering reliability, such as element destruction, and this is a limit value that should not be exceeded even momentarily. In general, the absolute maximum rated value defined for the terminals of each package often depends on the applied power supply voltage value. At these terminals, the absolute maximum rated value is also approximately 0 V when the power supply voltage of the element is not applied.

The microcomputer receives a signal output from the analog IC' and controls the electronic device based on the received signal. When the power supply voltage of the analog IC starts earlier than the power supply voltage of the microcomputer at the time of power-on of the electronic device or when the power supply voltage of the analog IC is cut off later than the power supply voltage of the microcomputer at the time of power-off, since the power supply voltage of the microcomputer does not start, there is a possibility that a certain signal will be output from the analog IC and the signal will be input to the terminal of the microcomputer even though the absolute maximum rated value of the terminal of the microcomputer is approximately 0 V. For this reason, there is a risk of exceeding the absolute maximum rated value of the microcomputer.

Patent Document 1 discloses a technique that allows the power-on timing for the LSI or the rise time of each power supply voltage to meet the specifications. However, there is no consideration for preventing the absolute maximum rated value of the terminal provided in the semiconductor integrated circuit from being exceeded due to the difference in the timing of the start or cutoff of the power supply voltage between a plurality of loads, such as a microcomputer and an analog IC.

It is an object of the present invention to provide a power conversion circuit that performs control so as to fall below the absolute maximum rated value of a terminal provided in a semiconductor integrated circuit.

### SOLUTIONS TO PROBLEMS

A preferred example of the present invention is a power conversion circuit including a power supply and a first load and a second load connected in parallel to the power supply. A first voltage and a second voltage are input to the first load and the second load, respectively. An output of the second load is input to the first load. A control unit that controls the first voltage and the second voltage based on a voltage at a connection point of the parallel connection is provided. The control unit controls the second voltage to be delayed from the first voltage when the power conversion circuit is activated.

### EFFECTS OF THE INVENTION

According to the present invention, it is possible to realize a power conversion circuit that performs control so as to fall below the absolute maximum rated value of a terminal provided in a semiconductor integrated circuit.

### BRIEF DESCRIPTION OF THE DRAWINGS

Fig. 1 is a diagram showing a power conversion circuit of a first embodiment.
Fig. 2 is a diagram showing an operation waveform at the time of power-on in the power conversion circuit of the first embodiment.
Fig. 3 is a diagram showing an operation waveform at the time of power-off in the power conversion circuit of the first embodiment.
Fig. 4 is a diagram showing a modification example of the power conversion circuit of the first embodiment.
Fig. 5 is a diagram showing a power supply configuration of a second embodiment.
Fig. 6 is a diagram showing a voltage detection circuit of a third embodiment.
Fig. 7 is a diagram showing an operation waveform at the time of power-on in a power conversion circuit of a fourth embodiment.
Fig. 8 is a diagram showing an operation waveform at the time of power-off in the power conversion circuit of the fourth embodiment.
Fig. 9 is a diagram showing a power conversion circuit of a fifth embodiment.
Fig. 10 is a diagram showing an operation waveform at the time of power-on in the power conversion circuit of the fifth embodiment.
Fig. 11 is a diagram showing an operation waveform at the time of power-off in the power conversion circuit of the fifth embodiment.
Fig. 12 is a diagram showing a power supply configuration of a sixth embodiment.
Fig. 13 is a diagram showing a clamp circuit of the sixth embodiment.
Fig. 14 is a diagram showing a voltage detection circuit of a seventh embodiment.
Fig. 15 is a diagram showing a modification example of the voltage detection circuit of the seventh embodiment.
Fig. 16 is a diagram showing a power conversion device of an eighth embodiment.

### MODE FOR CARRYING OUT THE INVENTION

Hereinafter, embodiments of the present invention will be described in detail with reference to the diagrams.

### First embodiment

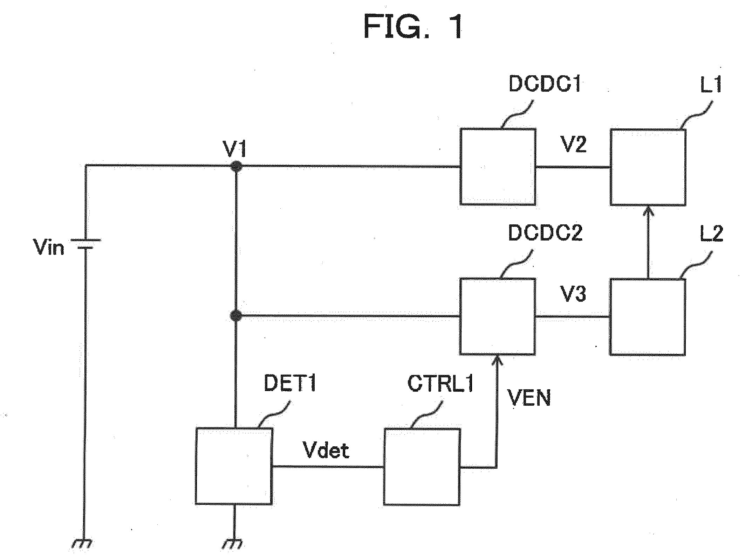

Fig. 1 is a configuration diagram of a power conversion device according to a first embodiment. As shown in Fig. 1, the power conversion circuit of the present embodiment includes a voltage source Vin for outputting a first DC voltage V1, two power converters DCDC1 and DCDC2 having a first voltage V1 as an input, loads L1 and L2 connected to the two power converters DCDC1 and DCDC2, respectively, a voltage detection unit DET1 for detecting the voltage V1 at a connection point where the loads L1 and L2 are connected in parallel, and a control unit CTRL1 for controlling ON/OFF of the power converter DCDC2 based on Vdet that is an output signal of the voltage detection unit DET1. As the control unit CTRL1, a comparator that outputs ON/OFF of the DCDC2 based on Vdet can be used.

The two power converters DCDC1 and DCDC2 output a voltage V2 and a voltage V3, respectively, from the input voltage V1, and output power to the loads L1 and L2 respectively connected thereto.

In addition, the voltage detection unit DET1 detects the value of the voltage V1 and outputs a voltage detection signal Vdet to the control unit CTRL1. The control unit CTRL1 outputs a control signal VEN for controlling ON/OFF of the power converter DCDC2 to the power converter DCDC2 based on the value of the input voltage detection signal Vdet.

Here, it is assumed that the load L1 shown in Fig. 1 is a signal receiving side (for example, a microcomputer), and the load L2 is a signal transmitting side (for example, an analog IC). In addition, in the power conversion circuit of the first embodiment, when the voltage source Vin is activated, the voltage V2 rises earlier than the voltage V3. Then, when the voltage source Vin is turned off, the voltage V2 drops later than the voltage V3 to operate so that the absolute maximum rated value of the terminal of the load L1 is not exceeded due to the output signal of the load L2.

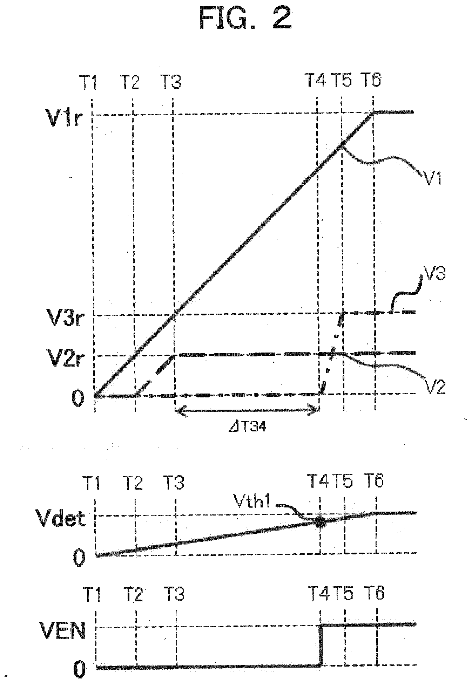

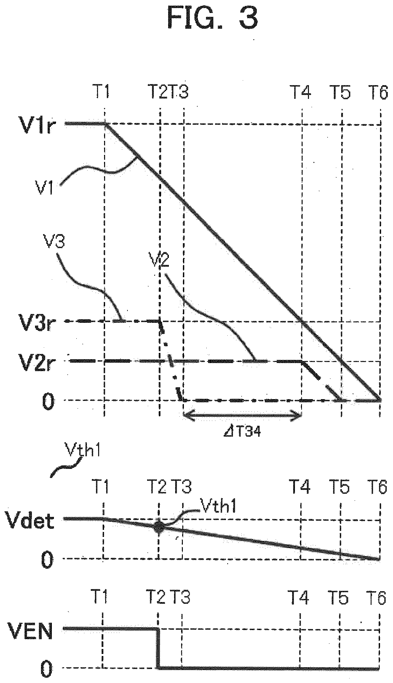

Next, the operation of the control unit CTRL1 will be described with reference to Figs. 2 and 3. Figs. 2 and 3 show a relationship among the voltages V1 to V3, the voltage detection signal Vdet of V1, and the ON/OFF control signal VEN of the power converter DCDC2. Fig. 2 shows a waveform when the voltage source Vin is turned on, and Fig. 3 shows a waveform when the voltage source Vin is turned off.

In addition, V1r to V3r are voltage command values when the voltages V1 to V3 operate in a steady state, a period until the voltages V1 to V3 become V1r to V3r, respectively, indicates when the voltage source Vin is turned on, and a period until the voltages V1 to V3 reach approximately 0 V from V1r to V3r, respectively, indicates when the voltage source Vin is turned off.

The operation when the voltage source Vin is turned on will be described with reference to Fig. 2. First of all, the voltage source Vin is turned on at T1. When the voltage source Vin is turned on, the voltage V1 starts to rise, and as the voltage V1 rises, the voltage detection signal Vdet of the voltage detection unit DET1 also starts to rise.

Thereafter, at T2, the power converter DCDC1 starts operating, and the voltage V2 starts to rise. When the voltage V2 reaches a command value V2r, the time is T3. Here, at T3, the voltage V2 becomes the command value V2r as the power converter DCDC1 is driven, but the voltage V3 is approximately 0 V because the power converter DCDC2 has not yet started its operation. Therefore, since the power supply voltage is applied to L1 (microcomputer) that is a load of the power converter DCDC1, a desired value is secured as the absolute maximum rated value of L1. In addition, since no power supply voltage is applied to L2 (analog IC) that is a load of the power converter DCDC2, no signal is output.

After the voltage V2 reaches the command value V2r, the voltage detection signal Vdet reaches a threshold value Vth1 after a delay time of ΔT34. This point in time is T4. At T4, an ON signal (VEN: L -> H) is output from the control unit CTRL1 to the power converter DCDC2. In response to this signal, the power converter DCDC2 starts operating, and the voltage V3, which is the output voltage of the power converter DCDC2, starts to rise.

When the voltage V3 reaches the command value V3r, the time shifts to T5. At T5, since the voltage V3 rises, the load L2 (analog IC) outputs a certain signal to the load L1 (microcomputer). However, since the power supply voltage V2 of the load L1 (microcomputer) is already V2r, there is no risk of exceeding the absolute maximum rated value. Finally, the voltage V1 reaches V1r at T6, and the activation of the power conversion circuit is completed.

Next, an operation when the voltage source Vin is turned off will be described with reference to Fig. 3. First of all, the voltage source Vin is turned off at T1, and the voltage V1 starts to drop. As the voltage V1 drops, the voltage detection signal Vdet of the voltage detection unit DET1 also starts to drop.

Thereafter, when the voltage detection signal Vdet reaches the threshold value Vth1, the time is T2. At T2, an OFF signal (VEN: H -> L) is output from the control unit CTRL1 to the power converter DCDC2. In response to this signal, the power converter DCDC2 is stopped, and the voltage V3, which is the output voltage of the power converter DCDC2, starts to drop.

When the voltage V3 reaches approximately 0 V, the time shifts to T3. Here, at T3, the voltage V2 is V2r because the power converter DCDC1 operates, but the voltage V3 is approximately 0 V because the power converter DCDC2 has already stopped. Therefore, since no power supply voltage is applied to L2 (analog IC) that is a load of the power converter DCDC2, no signal is output to the load L1 (microcomputer). In addition, since a power supply voltage is applied to L1 (microcomputer) that is a load of the power converter DCDC1, a desired value is secured as the absolute maximum rated value.

After the voltage V3 reaches approximately 0 V, the power converter DCDC1 is stopped after a delay time of ΔT34. When the power converter DCDC1 is stopped, the voltage V2 that is the output voltage of the power converter DCDC1 starts to drop. When the voltage V2 reaches approximately 0 V, the time shifts to T5. Finally, the voltage V1 reaches approximately 0 V at T6, and the cutoff of the power conversion circuit is completed.

As described above, in the first embodiment, it is an object that the output signal from the load L2 (analog IC) does not exceed the absolute maximum rated value of the load L1 (microcomputer) both when the power supply is turned on and when the power supply is turned off. Therefore, the control unit CTRL1 described in the present embodiment compares the threshold value Vth1 with the voltage detection signal Vdet, and outputs the ON/OFF control signal VEN to the power converter DCDC2 so that the power converter DCDC2 is turned on when Vdet exceeds Vth1 and the power converter DCDC2 is turned off when the voltage detection signal Vdet falls below Vth1.

In this manner, it is possible to realize a safe operation both when the voltage source Vin is turned on and when the voltage source Vin is turned off. Here, as shown in Figs. 2 and 3, the higher the threshold value Vth1, the longer a period (ΔT34) between T3 and T4 in Figs. 2 and 3, and the margin when the load L1 (microcomputer) is activated and deactivated increases. That is, it is possible to increase the possibility that the timing of the rise or fall of the voltage V2 and the voltage V3 can be set in a desired sequence. Therefore, even if there is an effect of noise from the outside or the like, it is possible to increase the margin by which it is possible to fall below the absolute maximum rated value of the terminal provided in the semiconductor integrated circuit, such as a microcomputer.

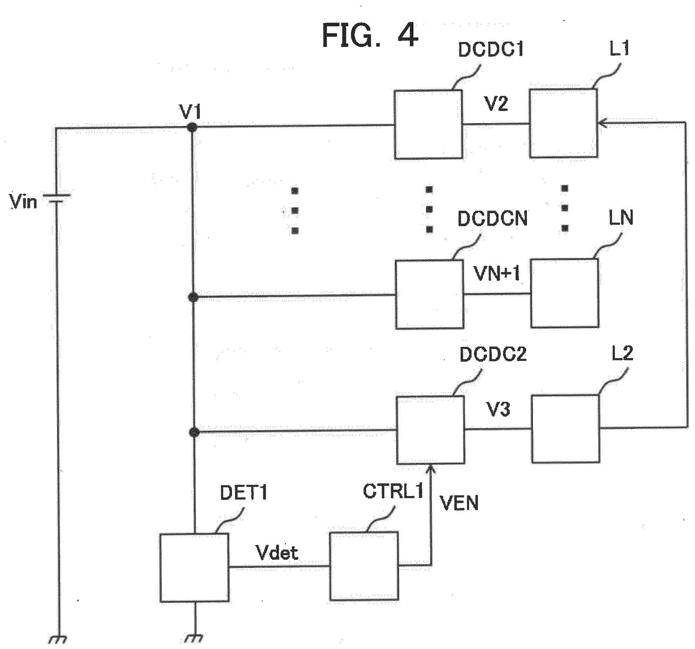

In addition, the power supply configuration in the present embodiment is not limited to two power converters having the voltage V1 as an input. For example, as shown in Fig. 4, a configuration including the voltage source Vin for outputting the first DC voltage V1, a plurality of power converters DCDC1 to DCDCN having the voltage V1 as an input, loads L1 to LN connected to the plurality of power converters DCDC1 to DCDCN, respectively, the voltage detection unit DET1 for detecting the voltage V1, and the control unit CTRL1 for controlling ON/OFF of one or more of the plurality of power converters DCDC1 to DCDCN may be adopted.

In addition, although the two power converters DCDC1 and DCDC2 are used in Fig. 1, the number of power converters may be one or no power converter may be provided as long as the input voltage V3 to the load L2 is controlled to be delayed from the input voltage V2 to the load L1 or V3 is controlled to be cut off earlier than V2. In addition, a control unit in which the functions of the voltage detection unit DET1 and the control unit CTRL1 are integrated may be used.

According to the first embodiment, it is possible to perform control so as to fall below the absolute maximum rated value of the terminal provided in the semiconductor integrated circuit. In addition, while Patent Document 1 only discloses the sequence of the voltage at the time of power-on, in the present embodiment, it is possible to reliably fall below the absolute maximum rated value of the terminal by controlling the voltage in different sequences when the power conversion circuit is activated and when the power conversion circuit is deactivated.

### Second embodiment

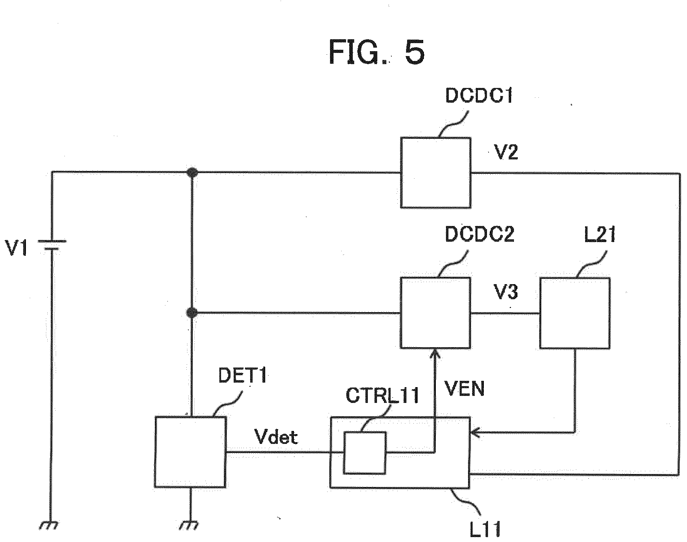

Next, a power conversion circuit according to a second embodiment will be described with reference to Fig. 5. In the present embodiment, the load L1 in the power conversion circuit according to the first embodiment has the function of the control unit CTRL1.

Fig. 5 shows the power conversion circuit according to the second embodiment. As shown in Fig. 5, the power conversion circuit of the present embodiment includes a voltage source Vin for outputting a first DC voltage V1, two power converters DCDC1 and DCDC2 having the first voltage V1 as an input, loads L11 and L21 connected to the two power converters DCDC1 and DCDC2, respectively, a voltage detection unit DET1 for detecting the voltage V1, and a control unit CTRL11 for controlling ON/OFF of one of the two power converters DCDC1 and DCDC2, and the load L11 has some or all of the functions of the control unit CTRL11.

Here, in the present embodiment, similarly to the first embodiment, the load L11 shown in Fig. 5 is a signal receiving side (for example, a microcomputer) and the load L21 is a signal transmitting side (for example, an analog IC). In addition, due to the operation of the control unit CTRL1 described in the first embodiment, the voltage V2 rises earlier than the voltage V3 when the voltage source Vin is turned on, and the voltage V2 drops later than the voltage V3 when the voltage source Vin is turned off. Also in the second embodiment, the operation waveforms at the time of power-on and power-off are as shown in Figs. 2 and 3.

Therefore, by adopting the circuit configuration shown in Fig. 5, after the voltage V2 reaches V2r and the load L11 (microcomputer) starts operating, the power converter DCDC2 can be activated in response to the output signal from the load L11. The supply of power from the power converter DCDC2 to the load L21 (analog IC) can occur only after the load L11 (microcomputer) is activated. That is, the load L11 rises earlier than the load L21. Therefore, the possibility that the output transmitted from the load L21 will exceed the absolute maximum rated value of the terminal of the load L11 is further reduced as compared with the first embodiment,

As described above, the second embodiment is characterized in that the load L11 has some or all of the functions of the control unit CTRL11. As a result, the power conversion circuit of the second embodiment operates more safely than the power conversion circuit of the first embodiment.

Also in the present embodiment, the number of power converters having the voltage V1 as an input is not limited to two. This is the same as in the first embodiment, and the description thereof will be omitted.

According to the second embodiment, the possibility of exceeding the absolute maximum rated value of the terminal of the load can be further reduced as compared with the first embodiment.

### Third embodiment

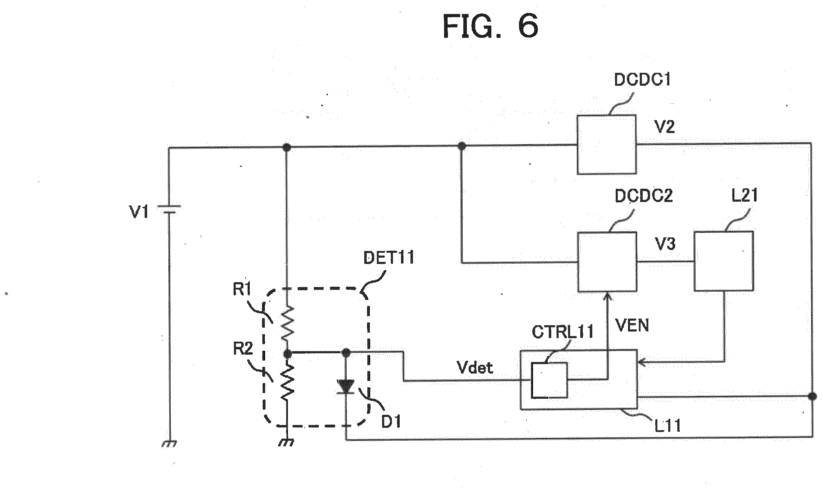

Next, a power conversion circuit according to a third embodiment will be described with reference to Fig. 6. In the present embodiment, an example of the configuration of the voltage detection unit DET1 of the power conversion circuits described in the first and second embodiments will be described. The description of a part overlapping the first and second embodiments will be omitted.

Fig. 6 shows a voltage detection unit DET11 in the present embodiment. The voltage detection unit DET11 of the present embodiment has V1 output from the voltage source Vin as an input, and outputs a voltage detection signal Vdet obtained by dividing the voltage V1 by resistors R1 and R2 to the control unit CTRL11.

According to the third embodiment, by adding a diode D1 between the voltage V2, which is a power supply voltage of the load L11 (microcomputer), and the voltage detection signal Vdet, it is possible to prevent the voltage detection signal Vdet from exceeding the absolute maximum rated value of the terminal of the load L11.

### Fourth embodiment

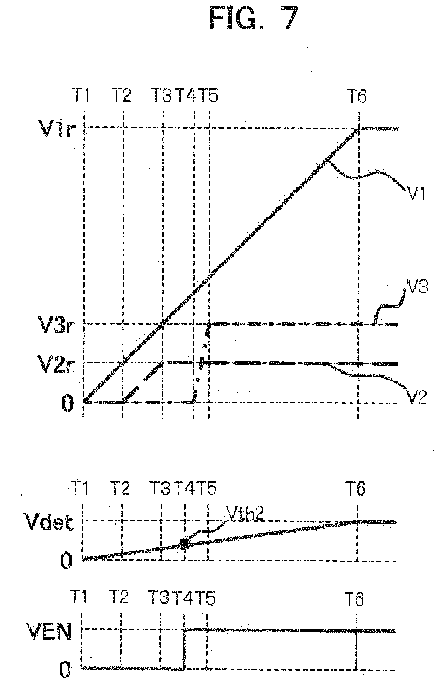

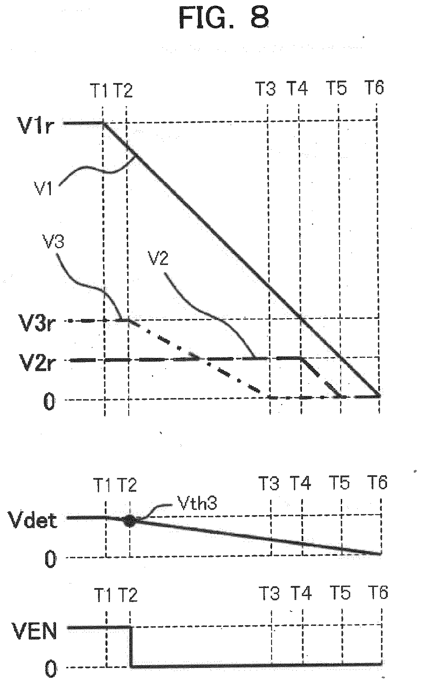

Next, a fourth embodiment will be described with reference to Figs. 7 and 8. The present embodiment has the same configuration as in the first to third embodiments, and is the same as the circuits of Figs. 1 and 5 and the like. The operation of the control unit is different from those in the other embodiments.

As described above, when the power conversion circuit is activated, the control unit CTRL1 in the first embodiment shown in Figs. 2 and 3 outputs a control signal for operating the power converter DCDC2 (VEN: L -> H) when the voltage detection signal Vdet output from the voltage detection unit DET1 becomes higher than the threshold value (Vth1). Then, when the power conversion circuit is deactivated, the control unit CTRL1 outputs a control signal for stopping the operation of the power converter DCDC2 (VEN: H -> L) when the voltage detection signal Vdet output from the voltage detection unit DET1 falls below the threshold value (Vth1).

However, the time taken for the voltages V1 to V3 to reach V1r to V3r from 0 V when the power conversion circuit is activated and the time taken for the voltages V1 to V3 to reach 0 V from V1r to V3r when the power conversion circuit is deactivated change depending on factors, such as the operating states of the loads L1 and L2, ambient temperature, and variations in element characteristics. With respect to such a change, in order to reliably prevent the absolute maximum rated value of the terminal of the microcomputer from being exceeded, which is the object of the present embodiment, it is desirable to set the threshold values when the power conversion circuit is activated and deactivated to different values in consideration of various conditions and change the threshold value according to the operating state.

Figs. 7 and 8 show a relationship among the voltages V1 to V3, the voltage detection signal Vdet of V1, and the ON/OFF control signal VEN of the power converter DCDC2 in the present embodiment. Fig. 7 shows a waveform when the voltage source Vin is turned on, and Fig. 8 shows a waveform when the voltage source Vin is turned off.

In addition, V1r to V3r are voltage command values when the voltages V1 to V3 operate in a steady state, a period until the voltages V1 to V3 become V1r to V3r, respectively, indicates when the power supply is turned on, and a period until the voltages V1 to V3 reach 0 V from V1r to V3r, respectively, indicates when the power supply is turned off.

As shown in Figs. 7 and 8, when the power conversion circuit is activated, the control unit in the present embodiment outputs a control signal for operating the power converter DCDC2 (VEN: L -> H) when the voltage detection signal Vdet output from the voltage detection unit DET1 or DET11 becomes higher than the first threshold value (Vth2). Then, when the power conversion circuit is deactivated, the control unit outputs a control signal for stopping the operation of the power converter DCDC2 (VEN: H -> L) when the voltage detection signal Vdet output from the voltage detection unit DET1 or DET11 falls below the second threshold value (Vth3).

According to the fourth embodiment, the timing of the rise or fall of the voltage V2 and the voltage V3 can be set in a desired sequence regardless of factors, such as the operating states of the loads L1 and L2, ambient temperature, and variations in element characteristics. Therefore, it is possible to reliably prevent the absolute maximum rated value of the terminal of the microcomputer from being exceeded.

### Fifth embodiment

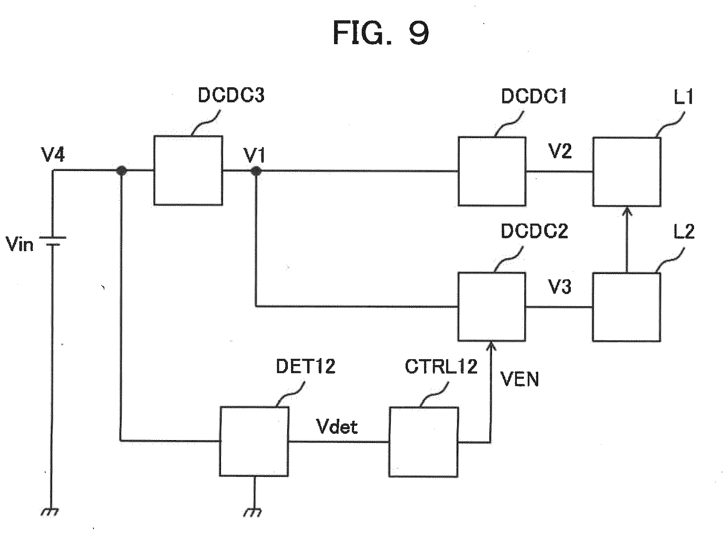

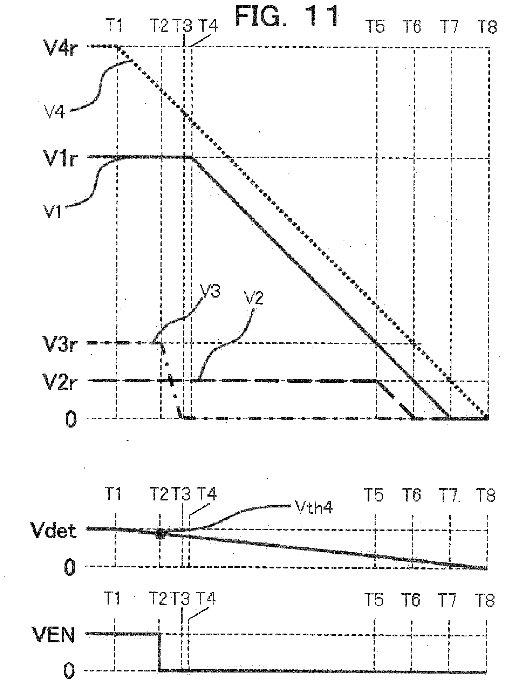

Next, a fifth embodiment will be described with reference to Figs. 9 and 11.

Fig. 9 shows the configuration of a power conversion circuit according to the present embodiment. As shown in Fig. 9, the power conversion circuit of the present embodiment includes a voltage source Vin for outputting a fourth DC voltage V4, a power converter DCDC3 which has the voltage V4 as an input and outputs a first voltage V1, two power converters DCDC1 and DCDC2 having the first voltage V1 as an input and connected in parallel to each other, loads L1 and L2 connected to the two power converters DCDC1 and DCDC2, respectively, a voltage detection unit DET 12 for detecting the voltage V4, and a control unit CTRL12 for controlling ON/OFF of the DCDC2.

The two power converters DCDC1 and DCDC2 output a voltage V2 and a voltage V3, respectively, from the input voltage V1, and output power to the loads L1 and L2 respectively connected thereto.

In the power conversion circuit described in the first embodiment shown in Fig. 1, the range of the voltage detection signal Vdet is divided in the range of 0 V to V1. However, in the power conversion circuit described in the present embodiment shown in Fig. 9, the range of the voltage detection signal Vdet is divided in the range of 0 V to V4 by adding the power converter DCDC3 to the power conversion circuit described in the first embodiment. Therefore, assuming that the voltage V1 described in Fig. 1 and the voltage V1 described in Fig. 9 have the same value, the upper limit value of the voltage detection signal Vdet described in the present embodiment can be made higher than that of the Vdet described in the first embodiment.

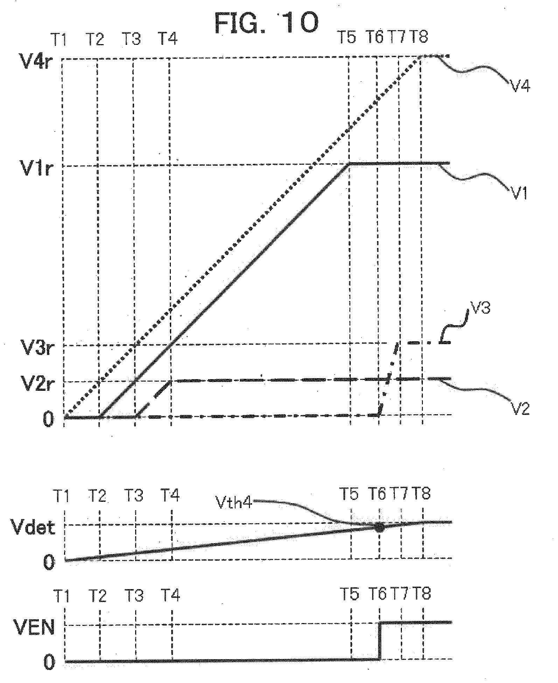

Figs. 10 and 11 show a relationship among the voltages V1 to V4, the voltage detection signal Vdet, and the ON/OFF control signal VEN of the power converter DCDC2 in the present embodiment. Fig. 10 shows a waveform when the voltage source Vin is turned on, and Fig. 11 shows a waveform when the voltage source Vin is turned off.

In addition, V1r to V4r are voltage command values when the voltages V1 to V4 operate in a steady state, a period until the voltages V1 to V4 become V1r to V4r, respectively, indicates when the power supply is turned on, and a period until the voltages' V1 to V4 reach 0 V from V1r to V4r, respectively, indicates when the power supply is turned off.

As shown in Figs. 10 and 11, when, the power conversion circuit is activated, the control unit CTRL12 in the present embodiment outputs a control signal for operating the power converter DCDC2 (VEN: L -> H) when the voltage detection signal Vdet output from the voltage detection unit DET12 becomes higher than the threshold value (Vth4). Then, when the power conversion circuit is deactivated, the control unit CTRL12 outputs a control signal for stopping the operation of the power converter DCDC2 (VEN: H -> L) when the voltage detection signal Vdet output from the voltage detection unit DET12 falls below the threshold value (Vth4).

The control unit CTRL1 in the first embodiment needs to specify the threshold value Vth1 according to the voltage detection signal Vdet obtained by dividing the voltage V1 in the range of 0 V to V1r. On the other hand, in the present embodiment, the threshold value Vth4 can be specified according to the voltage detection signal Vdet obtained by dividing the voltage V4 in the range of 0 V to V4r. That is, since the upper limit value of the threshold value can be made higher than those of the power conversion circuits described in the first to fourth embodiments, it is possible to make the voltage V3 rise after the voltage V1 reaches V1r as shown in Figs. 10 and 11. Therefore, it is possible to further increase the margin for preventing the absolute maximum rated value of the terminal of the microcomputer from being exceeded, which is the object of the present embodiment.

According to the fifth embodiment, the power converter DCDC3 is newly added to the power conversion circuits shown in the first to fourth embodiments. As a result, since the upper limit value of the threshold value is made higher than those in the first to fourth embodiments, it is possible to realize a safer operation.

### Sixth embodiment

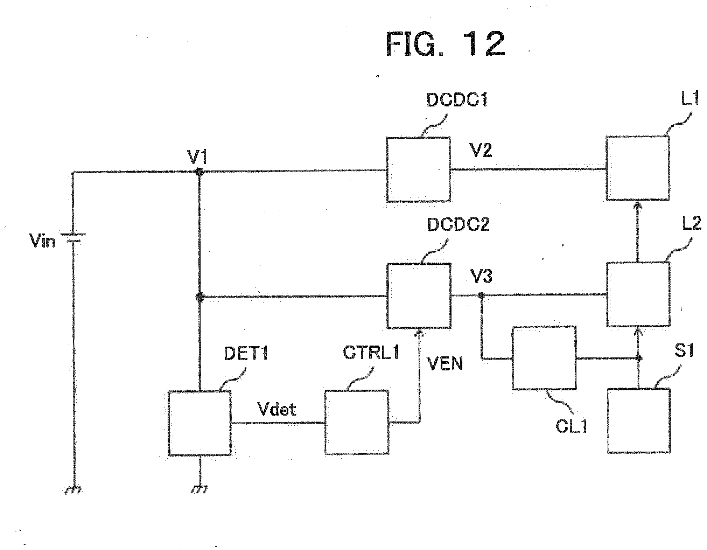

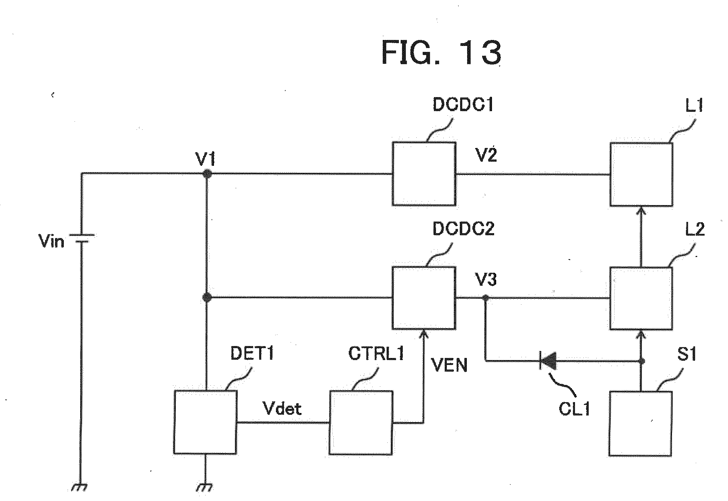

Next, a sixth embodiment will be described with reference to Figs. 12 and 13.

Fig. 12 shows the configuration of a power conversion circuit-according to the present embodiment. As shown in Fig. 12, the power conversion circuit of the present embodiment includes a signal output unit S1 for outputting a signal to the load L2 and a clamp circuit CL1, which clamps a voltage value so that a signal output from the signal output unit S1 does not exceed the absolute maximum rated value of the input terminal of the load L2, in the circuit shown in Fig. 1.

As shown in Fig. 12, the load L2 receives a signal from the signal output unit S1, processes the received signal in the load L2, and outputs the processed signal to the load L1. Here, when the absolute maximum rated value of the input terminal of the load L2 depends on the power supply voltage V3 of the load L2, if a signal is output from the signal output unit S1 before the power supply voltage V3 of the load L2 is started, the signal may exceed the absolute maximum rated value of the input terminal of the load L2. Therefore, as shown in Fig. 12, the clamp circuit CL1 is provided so that the output signal from the signal output unit S1 does not exceed the absolute maximum rated value of the input terminal of the load L2.

Fig. 13 shows an example of the clamp circuit CL1. As shown in Fig. 13, for example, by inserting a diode in such a manner that the output signal from the signal output unit S1 and the anode are connected to each other and the voltage V3 and the cathode are connected to each other, the maximum value of the output signal from the signal output unit S1 does not exceed the total value of the voltage V3 and the on-voltage of the diode. Therefore, even when the signal output unit S1 outputs a signal to the load L2 before the voltage V3 is started, the possibility of exceeding the absolute maximum rated value of the input terminal of the load L2 is reduced as compared with the first embodiment.

In addition, in Figs. 12 and 13, the effect of reducing the possibility of exceeding the absolute maximum rated value of the input terminal of the load L2 compared with the first embodiment by adding the signal output unit S1 and the clamp circuit CL1 to Fig. 1 has been described. However, the same effect can be obtained for all of the first to fifth embodiments by applying the clamp circuit CL1 to the locations shown in Figs. 12 and 13 with respect to Figs. 4 to 6 and 9.

According to the sixth embodiment, the clamp circuit CL1 that clamps the signal input from the signal output unit S1 to the load L2 to a value that does not exceed the absolute maximum rated value, of the load L2 is provided in the power conversion circuits shown in the first to fifth embodiments. As a result, it is possible to realize a safer operation than in the power conversion circuits shown in the first to fifth embodiments.

### Seventh embodiment

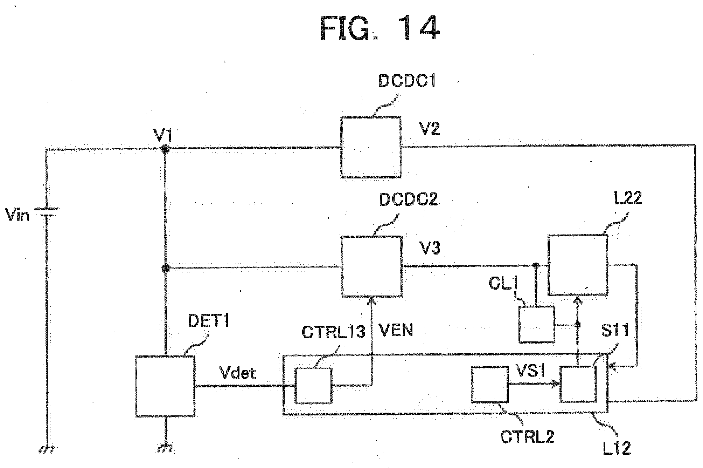

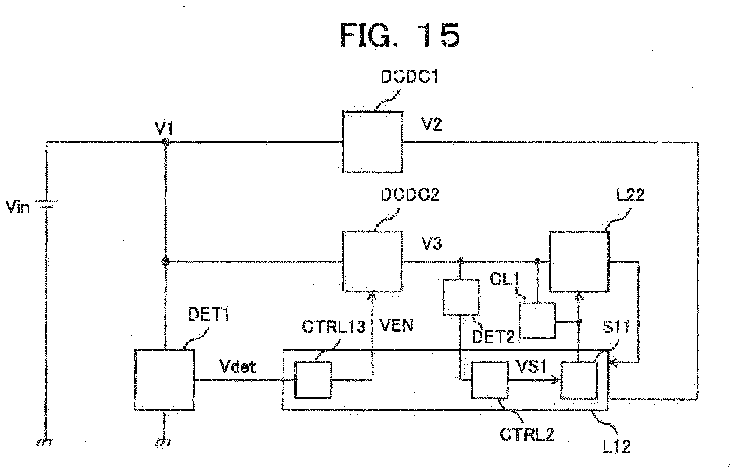

Next, a seventh embodiment will be described with reference to Figs. 14 and 15.

Fig. 14 shows the configuration of a power conversion circuit according to the present embodiment. As shown in Fig. 14, the power conversion circuit of the present embodiment includes a voltage source Vin for outputting a first DC voltage V1, two power converters DCDC1 and DCDC2 having the first voltage V1 as an input, two loads L12 and L22 connected to the two power converters DCDC1 and DCDC2, respectively, a voltage detection unit DET1 for detecting the voltage V1, a control unit CTRL13 for controlling ON/OFF of one of the two power converters DCDC2, a signal output unit S11 for outputting a signal to the load L22, a control unit CTRL2 for outputting a signal VS1 allowing the signal output from the signal output unit S11 to the load L22 to the signal output unit S11, and a clamp circuit CL1 for clamping the output signal from the signal output unit S1 so as not to exceed the absolute maximum rated value of the input terminal of the load L2. The load L12 has some or all of the functions of the control unit CTRL13, the control unit CTRL2, and the signal output unit S11.

As shown in Fig. 14, the load L2 receives a signal from the signal output unit S11, processes the received signal in the load L22, and outputs the processed signal to the load L12. In the configuration shown in Fig. 14, unlike the configuration shown in Fig. 12, the load L12 can control both the control signal VEN for controlling ON/OFF of the power converter DCDC2 and the signal input from the signal output unit S11 to the load L22.

Therefore, when the power converter DCDC2 is activated, during a predetermined period until the voltage V3 is started after the control signal for starting the operation of the power converter DCDC2 is output from the control unit CTRL13 to the power converter DCDC2, the output permission signal VS1 can be output from the control unit CTRL2 to the signal output unit S11 so as to stop the signal output from the signal output unit S11 to the load L22. After a predetermined time, the signal output from the signal output unit S11 to the load L22 can be started.

In addition, when the power converter DCDC2 is deactivated, after detecting the cutoff of the voltage V3, the output permission signal VS1 can be output from the control unit CTRL2 to the signal output unit S11 so as to stop the signal output from the signal output unit S11 to the load L22, and the signal output from the signal output unit S11 to the load L22 can be stopped before the cutoff of the voltage V3 is completed.

Fig. 15 shows a modification example of Fig. 14. A circuit shown in Fig. 15 includes a voltage detection unit DET2 for detecting the value of the voltage V3 in the circuit shown in Fig. 14, and the control unit CTRL2 receives a signal of the voltage detection unit DET2. In this manner, the control unit CTRL2 can output the output permission signal VS1 to the signal output unit S1 based on the detection value of the voltage detection unit DET2.

Therefore, when the power converter DCDC2 is activated, until the voltage V3 reaches a predetermined voltage value, the output permission signal VS1 is output from the control unit CTRL2 to the signal output unit S11 so as to stop the signal output from the signal output unit S11 to the load L22. After the voltage V3 reaches a predetermined voltage value, the output permission signal VS1 is output from the control unit CTRL2 to the signal output unit S11 so as to start the signal output from the signal output unit S11 to the load L22. Thus, it is possible to start the signal output from the signal output unit S11 to the load L22.

In addition, when the power converter DCDC2 is deactivated, after detecting the cutoff of the voltage V3, the output permission signal VS1 can be output from the control unit CTRL2 to the signal output unit S11 so as to stop the signal output from the signal output unit S11 to the load L22, and the signal output from the signal output unit S11 to the load L22 can be stopped before the cutoff of the voltage V3 is completed.

As described above, in the seventh embodiment, the load L12 has some or all of the functions of the control unit CTRL13, the control unit CTRL2, and the signal output unit S11. As a result, since the possibility that the signal input from the signal output unit S11 to the load L22 will exceed the absolute maximum rated value of the input terminal of the load L22 is lower than that in the power conversion circuits shown in the first to sixth embodiments, it is possible to realize a safer operation.

### Eighth embodiment

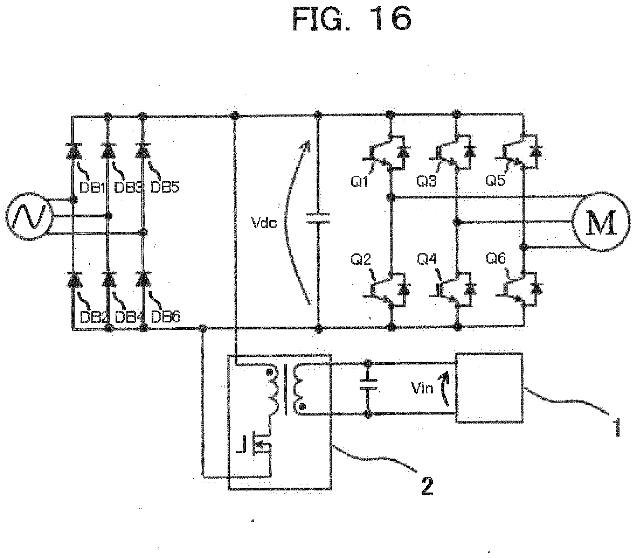

Next, an eighth embodiment will be described with reference to Fig. 16. Commonalities with the first to seventh embodiments will be omitted.

Fig. 16 shows an application example of the power conversion circuits described in Figs. 1 to 15. In the present embodiment, a circuit configuration when application to a power conversion device (inverter circuit), to which power from an AC power supply is input and which outputs power to an AC load, such as a motor, is made will be described.

Fig. 16 shows a power conversion device configured to include a rectifier circuit formed by diodes D1 to D6, to which power from an AC power supply is input, and an inverter circuit formed by switching elements Q1 to Q6. In this power conversion device, a power conversion circuit 1 of the present embodiment is connected between the terminals on the high voltage side and the low voltage side of the DC voltage.

The voltage of the output unit of the rectifier circuit is a DC voltage Vdc corresponding to the voltage of the AC system, and the voltage V1 shown in Fig. 1 or the voltage V4 shown in Fig. 9 is input from a DC voltage Vdc to the power conversion circuit 1 through a power conversion circuit 2, such as a flyback converter, for example. In the power conversion circuit 1 according to each of the first to seventh embodiments, an analog IC detects the current of a motor, and a microcomputer that receives a signal based on the current of the motor from the analog IC controls the gates of the switching elements Q1 to Q6 of the inverter circuit.

As described above, in the present embodiment, the circuit configuration when the power conversion circuits shown in the first to seventh embodiments are applied to the power conversion device formed by an inverter circuit, to which AC power from an AC power supply is input and which outputs AC power, has been described. In addition, the application of the power conversion circuit 1 is not limited to this, and the power conversion circuit 1 can be applied to a DC-input or DC-output power conversion device.

According to the eighth embodiment, when application to the power conversion device is made, it is possible to prevent the absolute maximum rated value of the terminal of the microcomputer of the power conversion circuit 1 from being exceeded.

### REFERENCE SIGNS LIST

Vin Voltage source
DCDC1, DCDC2, DCDC3 Power converter
L1, L2, L11, L12, L21, L22 Load
DET1, DET11, DET12, DET2 Voltage detector
CTRL1, CTRL11, CTRL12, CTRL13, CTRL2 Control unit
S1, S11 Signal output unit
Vdet Voltage detection signal
VEN Control signal
VS1 Output permission signal

## Claims

1. A power conversion circuit, comprising:
a power supply; and
a first load and a second load connected in parallel to the power supply,
wherein a first voltage and a second voltage are input to the first load and the second load, respectively,
an output of the second load is input to the first load,
a control unit that controls the first voltage and the second voltage based on a voltage at a connection point of the parallel connection is provided, and
the control unit controls the second voltage to be delayed from the first voltage when the power conversion circuit is activated.

2. The power conversion circuit according to claim 1,
wherein the control unit controls the second voltage to be cut off earlier than the first voltage when the power conversion circuit is deactivated.

3. The power conversion circuit according to claim 1 or 2,
wherein, when the power conversion circuit is activated, the control unit performs control so that the second voltage reaches a second voltage command value after the first voltage reaches a first voltage command value.

4. The power conversion circuit according to any one of claims 1 to 3, further comprising:
a first power converter that outputs the first voltage; and
a second power converter that outputs the second voltage.

5. The power conversion circuit according to claim 4, further comprising:
a first voltage detection unit that detects a voltage at the connection point.

6. The power conversion circuit according to claim 5,
wherein, when the power conversion circuit is activated, the control unit outputs a signal for operating the second power converter when a detection signal output from the first voltage detection unit exceeds a first threshold value.

7. The power conversion circuit according to claim 6,
wherein, when the power conversion circuit is deactivated, the control unit outputs a signal for stopping an operation of the second power converter when a detection signal output from the first voltage detection unit falls below the first threshold value.

8. The power conversion circuit according to claim 6,
wherein, when the power conversion circuit is deactivated, the control unit outputs a signal for stopping an operation of the second power converter when a detection signal output from the first voltage detection unit falls below a second threshold value, and
the first threshold value and the second threshold value are different.

9. The power conversion circuit according to any one of claims 1 to 8,
wherein the first load includes a part or entirety of the control unit.

10. A power conversion circuit, comprising:
a voltage source;
a first power converter to which a voltage of the voltage source is input and which outputs a first voltage;
a second power converter to which the first voltage is input and which outputs a second voltage;
a third power converter to which the first voltage is input and which outputs a third voltage;
a first load connected to the second power converter;
a second load connected to the third power converter;
a first voltage detection unit that detects the first voltage and outputs a detection signal; and
a control unit to which the detection signal output from the first voltage detection unit is input and which outputs a control signal to the third power converter,
wherein the control unit controls the third voltage to be delayed from the second voltage based on the detection signal when the power conversion circuit is activated, and controls the third voltage to be cut off earlier than the second voltage based on the detection signal when the power conversion circuit is deactivated.

11. The power conversion circuit according to any one of claims 1 to 10, further comprising:
a signal output unit that outputs a signal to the second load; and
a clamp circuit that operates so that an output of the signal output unit does not exceed an absolute maximum rated value of the second load.

12. The power conversion circuit according to claim 11,
wherein the clamp circuit includes a diode.

13. The power conversion circuit according to any one of claims 1 to 10, further comprising:
a signal output unit that outputs a signal to the second load,
wherein the first load includes a part or entirety of the signal output unit.

14. The power conversion circuit according to any one of claims 11 to 13, further comprising:
a second voltage detection unit that detects the second voltage,
wherein the signal output unit stops an output to the second load when an output signal of the second voltage detection unit falls below a predetermined voltage.

15. The power conversion circuit according to claim 5 or 14,
wherein the first voltage detection unit and the second voltage detection unit have a resistor or a diode.

16. The power conversion circuit according to any one of claims 1 to 15,
wherein the first load includes a microcomputer, and
the second load includes an analog IC.

17. The power conversion device, comprising:
an AC voltage source;
a rectifier circuit that rectifies an AC voltage from the AC voltage source; and
an inverter circuit that converts a DC voltage obtained by rectification of the rectifier circuit into an AC voltage,
wherein the power conversion circuit according to any one of claims 1 to 16 is connected between terminals on a high voltage side and a low voltage side of the DC voltage.
